# EUROPEAN PATENT APPLICATION

(11) **EP 4 838 276 A1**
(43) Date of publication of application: **11.11.2026**
(21) Application number: 25775196.6
(22) Date of filing: 04.02.2025
(51) Int. Cl.: G02B 6/36, G02B 6/46

(54) **OPTICAL ADAPTER RETENTION STRUCTURE AND OPTICAL CONNECTOR INSERTION/REMOVAL METHOD**

(30) Priority: 27.03.2024 JP 2024051613
(71) Applicant: Shoden Seiwa Co., Ltd., Tokyo 101-0047 (JP)
(72) Inventor: SAKAGUCHI, Motokazu, Tokyo 101-0047 (JP); ISHII, Tatsuya, Tokyo 101-0047 (JP)
(74) Representative: Goddar, Heinz J.
(86) International application number: PCT/JP2025/003621
(87) International publication number: WO 2025/204146

(57) **Abstract**

Hard magnetic bodies (43) are fixed on both sides of an optical adapter (10) in the width direction, which is the direction in which a plurality of the optical adapters (10) are installed in parallel. The part of a fixture (7) that faces the hard magnetic bodies (43) provided on the optical adapter (10) is formed from another hard magnetic body or soft magnetic body that can attract the hard magnetic bodies (43). The vertical position of the hard magnetic body (43) on one side of the optical adapter (10) in the width direction is different from the vertical position of the hard magnetic body (43) on the other side of the optical adapter (10) in the width direction. That is, the vertical position of the hard magnetic body (43) on one side of the optical adapter (10) in the width direction and the vertical position of the hard magnetic body (43) on the other side of the optical adapter (10) in the width direction are different so that the hard magnetic bodies (43) are disposed at non-overlapping positions in the height direction.

## Description

### TECHNICAL FIELD

The present invention relates to an optical adapter retention structure and the like that are used for coupling communication cables such as optical fiber cables and optical cords.

### BACKGROUND OF THE INVENTION

The number of optical fibers to be laid has continued to rise conventionally due to a rapid increase in optical communication traffic. This has also led to a need of a high-density packaging of optical adapters, which are used at coupling points between optical fiber cables or optical cords. However, when optical adapters are densely packaged, spacing between adjacent optical adapters decreases, which leads to a decrease in spacing between optical connectors to be connected. For this reason, when inserting or removing an optical connector to or from an optical adapter, it is impossible to leave space for fingers to be inserted between adjacent optical connectors.

To make space for insertion/removal operations of optical connectors while still densely packaging optical adapters, Patent Documents 1 and 2, for example, have proposed methods for densely packaging adapters. The methods include a mechanism in which an adapter or an adapter mounting fixture, to or from which an optical connector to be inserted or removed is to be fitted, is rotated first at the time of insertion/removal operation to create space for insertion/removal operations.

However, the methods described in Patent Documents 1 and 2 require to rotate the optical adapter during the insertion/removal operation of the optical connector, to hold the optical adapter in such position with a finger or the like, and to perform the insertion/removal operation of the optical connector while maintaining such the rotated state. Thus, the operation has been difficult.

In contrast, Patent Document 3 has proposed an optical adapter retention structure that allows to easily swing other adjacent optical adapters during an operation of insertion/removal of an optical adapter and to keep retaining such the optical adapters in a direction perpendicular to a fixture after the operation. In Patent Document 3, the optical adapters can swing as well as can be held in the position by using attractive force of a hard magnetic body.

### RELATED ARTS

### (PATENT DOCUMENTS)

[Patent Document 1] Japanese Utility Model Application Laid-Open Publication No. 1990-098314 (JP-UM-1990-098314)
[Patent Document 2] Japanese Patent Application Laid-Open Publication No. 2003-86967 (JP-A-2003-86967)
[Patent Document 3] Japanese Patent Application Laid-Open Publication No. 2022-97841 (JP-A-2022-97841)

### SUMMARY OF THE INVENTION

### (PROBLEMS TO BE SOLVED BY THE INVENTION)

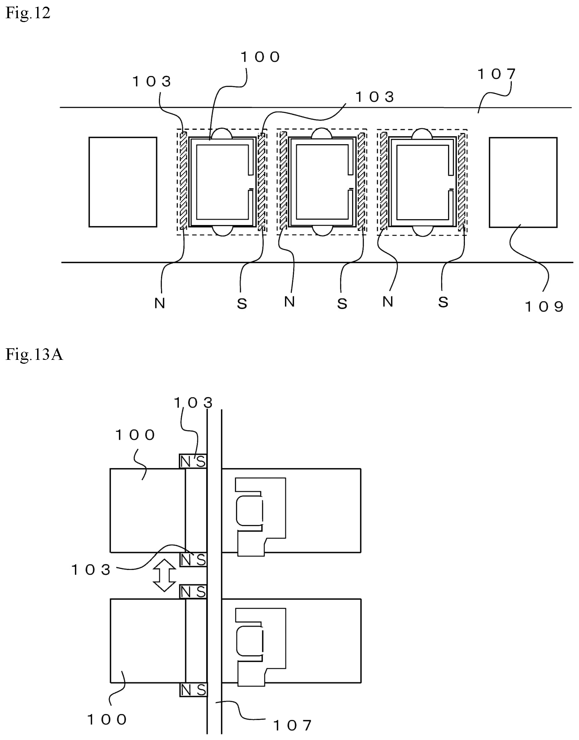

FIG. 12 is a front view showing a state in which conventional optical adapters 100 are provided side by side in mounting holes 109 of a fixture 107. N and S in the drawing each denotes a polarity of a hard magnetic body. A hard magnetic body 103 is disposed on each side of a width direction of the optical adapter 100 such that the polarity thereof is opposite to one another. Also, the polarity of each hard magnetic body 103 of the optical adapters 100 provided side-by-side is arranged alternately with respect to a direction in which the optical adapters 100 are provided side by side. That is, the polarities of the hard magnetic bodies 103, which are close to each other, of the adjacent optical adapters 100 are opposite to one another.

When the hard magnetic bodies 103 of the adjacent optical adapters 100 have opposite polarities as above, both attract each other. That is, when the optical adapters 100 are attracted to the fixture 107, the hard magnetic bodies 103 attract each other in a stable state.

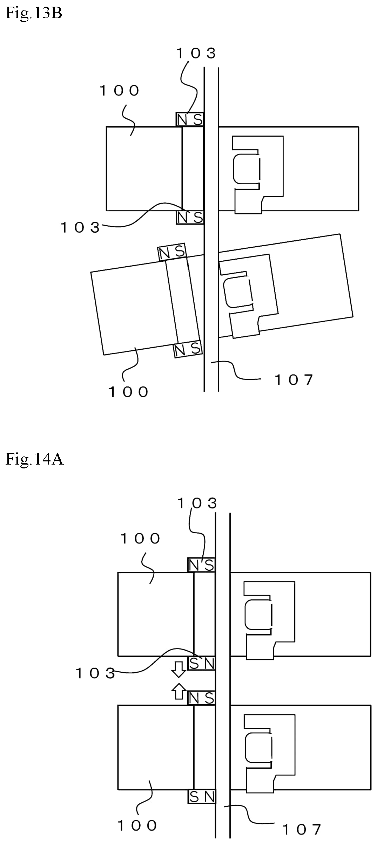

For example, if the hard magnetic bodies 103 on both sides of the optical adapter 100 all have the same polarity, the hard magnetic bodies 103 of the adjacent optical adapters 100 have the same polarity. FIG. 13A is a plan view of a case in which the hard magnetic bodies 103 on both sides of the optical adapters 100 are arranged with the same polarity. In such the case, the adjacent hard magnetic bodies 103 repel each other. That is, when the hard magnetic bodies 103 repel each other while the optical adapters 100 are attracted to the fixture 107, force that makes the optical adapter 100 separate away from the fixture 107 is applied, which may lead to an unstable state. For example, as shown in FIG. 13B, when one of the optical adapters 100 swings, the N pole and S pole of the adjacent hard magnetic bodies 103 get closer and attract each other, inhibiting the optical adapter 100 to return from such the state to the original position. However, increasing the distance between the optical adapters 100 (between the adjacent hard magnetic bodies 103) to reduce such the influence may lower the packaging density.

In contrast, by making the polarity of the hard magnetic bodies 103 on both sides of the width direction of the optical adapter 100 opposite to each other, and by arranging the polarity of each hard magnetic body 103 of the optical adapters 100 provided side-by-side alternately with respect to the direction in which the optical adapters 100 are provided side by side, the adjacent optical adapters 100 can be brought closer to each other, thereby increasing the packaging density.

FIG. 14A is a plan view of a case in which the hard magnetic bodies 103 on both sides of the optical adapter 100 are arranged with different polarities. As mentioned above, the adjacent optical adapters 100 attract each other in a normal state, and thus even if one of the optical adapters 100 swings slightly, force that helps the optical adapter 100 to return to the original position is applied due to the attractive force between the hard magnetic body 103 and the fixture 107.

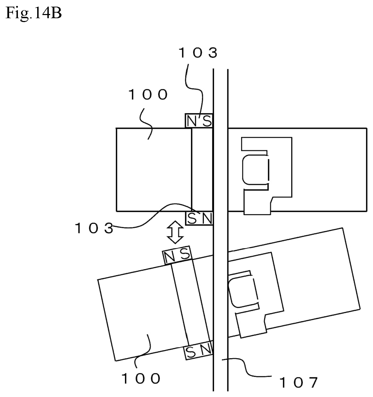

However, as shown in FIG. 14B, if the optical adapters 100 are closer to each other and a swing angle is increased to a certain amount, the same poles of the adjacent hard magnetic bodies 103 get closer, causing repellent force. In such the state, the repellent force may inhibit the optical adapter 100 from returning to the original position.

The present invention was made in view of such problems. It is an object of the present invention to provide an optical adapter retention structure that enables dense packaging and stable operation.

### (MEANS FOR SOLVING PROBLEMS)

To achieve the above object, a first aspect of the present invention is an optical adapter retention structure including a fixture having a plurality of mounting holes that are provided side by side, optical adapters to be mounted into the plurality of mounting holes, and a swing mechanism that allows the optical adapters to swing with respect to the fixture. Hard magnetic bodies are fixed in the vicinity of both end portions in a width direction of the optical adapter, the width direction being a direction in which the optical adapters are provided side by side. A part of the fixture facing the hard magnetic bodies provided on the optical adapters is formed of a soft magnetic body that can attract the hard magnetic bodies. A vertical position of the hard magnetic body on one side of the optical adapter in the width direction is different from a vertical position of the hard magnetic body on the other side of the optical adapter in the width direction. For any one of the optical adapters, when a force equal to or greater than attractive force of the hard magnetic bodies is applied to the optical adapters that are adjacent to the said optical adapter, the swing mechanism allows the optical adapters that are adjacent to the said optical adapter to swing in a direction in which the adjacent optical adapters are provided as viewed from the said optical adapter, and when the force is removed, the swing mechanism can hold the optical adapters in a direction substantially perpendicular to the fixture due to the attractive force of the hard magnetic bodies.

The hard magnetic bodies may be fixed to a main body of the optical adapter using retaining means.

The retaining means may be formed integrally with the main body of the optical adapter.

The retaining means may include concave portions, and the hard magnetic bodies may be fitted into the concave portions.

There may be a clearance formed between the hard magnetic bodies and the fixture.

The hard magnetic body may be disposed in the vicinity of an end portion in the width direction of the optical adapter on each surface in a vertical direction that is perpendicular to the direction in which the optical adapters are provided side by side.

According to the first aspect of the present invention, when fingers are inserted into a apace between adjacent optical adapters for insertion or removal of the optical connector, the fingers touch the adjacent optical adapters and optical connectors since the optical adapters are arranged densely, and thus the adjacent optical connectors receive force in a lateral direction with respect to an insertion/removal direction of the connector. At this time, the hard magnetic bodies are fixed to the optical adapters and the fixture facing the hard magnetic bodies of the optical adapters is formed of a soft magnetic body that can attract to the hard magnetic bodies such that, when a force equal to or greater than attractive force of the hard magnetic bodies is applied to adjacent optical connection members, the optical connection members can swing, creating an operation space for the fingers. Also, when the force is removed, the optical adapters return to the original positions and the attractive force of the hard magnetic bodies can hold the optical adapters.

Also, since the vertical position of the hard magnetic body on one side of the optical adapter in the width direction is different from the vertical position of the hard magnetic body on the other side of the optical adapter in the width direction, it is possible to suppress interference between the adjacent hard magnetic bodies, and it is also possible to reliably return the optical adapter to the original position when the force applied to the optical adapter is removed.

In particular, by fixing the hard magnetic body to the main body of the optical adapter using the retaining means, the hard magnetic body can be reliably retained.

Forming such the retaining means integrally with the main body of the optical adapter can reduce the number of components.

Also, it is possible to retain the hard magnetic bodies reliably by fitting the hard magnetic bodies into the concave portions provided in the retaining means. In addition, the attractive force between the fixture and the hard magnetic bodies can be adjusted by forming a clearance between the fixture and the hard magnetic bodies.

Also, by disposing the hard magnetic body on each surface in the vertical direction that is perpendicular to the side-by-side direction of the optical adapters, it is possible to narrow the spacing between the optical adapters, and the optical adapters can be disposed more densely.

A second aspect of the present invention is an optical connector insertion/removal method with respect to the optical adapter retention structure according to the first aspect of the present invention. The method includes, when inserting or removing the optical connector to or from any one of the optical adapters, swinging the other optical adapters that are adjacent to the said optical adapter in a direction in which the optical adapters are provided side by side by using the swing mechanism to create space around the said optical adapter, and returning the other optical adapters to original positions by using the swing mechanism after the insertion/removal operation is completed.

According to the second aspect of the present invention, workability is good and the insertion/removal operation of the connector is easy.

### (EFFECTS OF THE INVENTION)

The present invention can provide an optical adapter retention structure that enables dense packaging and stable operation.

### BRIEF DESCRIPTION OF DRAWINGS

FIG. 1 is a view showing an optical patch panel 3.
FIG. 2 is a view showing a rack 1.
FIG. 3A is a front view showing a state in which optical adapters 10 and the like are mounted onto a fixture 7.
FIG. 3B is a side view showing a state in which the optical adapter 10 and the like are mounted onto the fixture 7.
FIG. 3C is a plan view showing a state in which the optical adapters 10 and the like are mounted onto the fixture 7.
FIG. 4A is a view showing movement of the optical adapters 10.
FIG. 4B is a view showing movement of the optical adapters 10.
FIG. 5 is a view showing the optical adapter 10.
FIG. 6 is a plan view showing a state in which the optical adapters 10 are provided side by side.
FIG. 7A is a plan view showing a state in which the optical adapters 10 are provided side by side with a holder 47 being used.
FIG. 7B is a front view showing a state in which the optical adapters 10 are provided side by side with the holder 47 being used.
FIG. 8A is a plan view of the optical adapter 10 with another holder 47 being used.
FIG. 8B is a front view of the optical adapter 10 with the other holder 47 being used.
FIG. 9 is a front view of the optical adapter 10 with yet another holder 47 being used.
FIG. 10 is a plan view of the optical adapter 10 with an integrated holder.
FIG. 11A is a plan view showing a state in which the optical adapters 10a with the holders 47 being used are provided side by side.
FIG. 11B is a front view of the optical adapters 10a with the holders 47 being used.
FIG. 12 is a view showing polarity of hard magnetic bodies when the optical adapters 100 are provided side by side.
FIG. 13A is a plan view of the optical adapters 100 that are provided side-by-side with same polarity.
FIG. 13B is a plan view of the optical adapters 100 that are provided side-by-side with same polarity.
FIG. 14A is a plan view of the optical adapters 100 that are provided side-by-side with different polarity.
FIG. 14B is a plan view of the optical adapters 100 that are provided side-by-side with different polarity.

### DETAILED DESCRIPTION

### (First Embodiment)

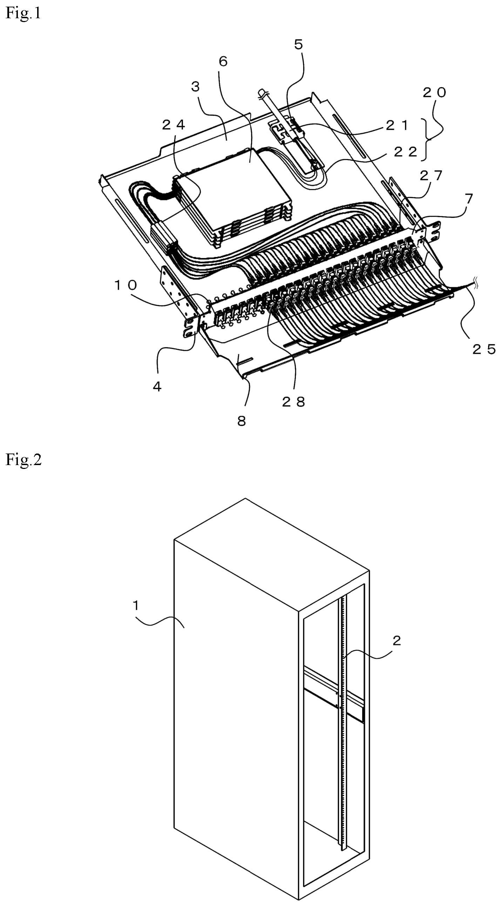

Hereinafter, some embodiments of the present invention will be described in detail with reference to the accompanying drawings. FIG. 1 is a view showing an optical patch panel 3, which is one exemplary embodiment of the present invention, and FIG. 2 is a view showing a rack 1. The rack 1 is a 19-inch rack, for example, and the optical patch panel 3 is mounted on the rack 1, and a mounting portion 4 of the optical patch panel 3 is fixed to a frame 2 of the rack 1 by using screws or the like.

An outside line cable 20 is introduced from a back face side of the optical patch panel 3, and an outside line cable fixing portion 5 provided at the rear of the optical patch panel 3 fixes the outside line cable 20 to the optical patch panel 3. A cable sheath 21 of the outside line cable 20 is removed inside the optical patch panel 3, and optical fibers 22 inside are wired to an optical fiber-splicing tray 6. The optical fibers 22 and an optical-connector-attached conversion cord 24, which has an optical connector such as SC, LC, or MPO etc. (hereinafter, simply referred to as "SC etc."), are spliced together by fusion or the like. The spliced portions are accommodated inside the optical fiber-splicing tray 6 along with the extra lengths of the optical fibers 22 and the optical-connector-attached conversion cord 24 such as SC etc.

A plate-shaped fixture 7 to which an optical adapter 10 such as LC can be mounted is provided at a front side of the optical patch panel 3. A cord-receiving tray 8 is provided further front side of the fixture 7. The cord-receiving tray 8 can receive optical-connector-attached central office cords 25 from underneath.

A plurality of the optical adapters 10 are mounted onto the fixture 7. An outside line side optical connector 27 is inserted into the optical adapter 10 from the rear side, and a central office side optical connector 28 of the optical-connector-attached central office cord 25 is inserted into the optical adapter 10 from the front side. The outside line cable 20 to be connected can be optionally switched by changing the optical adapter 10 to which the central office side optical connector 28 is to be inserted.

A structure of the optical patch panel 3 is not limited to the illustrated example. For example, although the example shows a case in which the outside line cable 20 without an optical connector is introduced from the rear side of the optical patch panel 3, an optical-connector-attached cord or an optical-connector-attached cable may also be introduced. In such cases, the structure of the optical patch panel may not include the optical fiber-splicing tray 6.

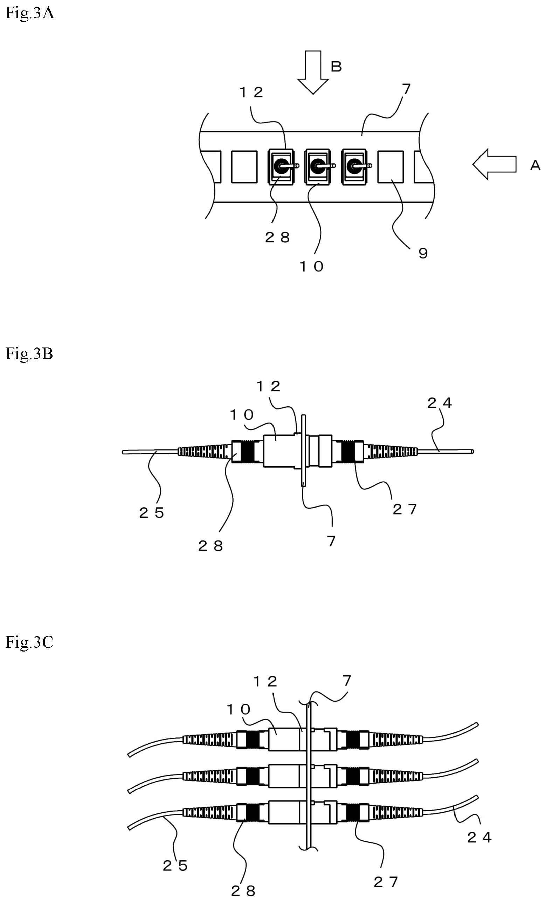

Next, movement of an optical adapter and the like, which is common to the optical adapters according to the present invention, will be described. FIG. 3A to FIG. 3C are views showing a state in which the optical adapters 10 and the like are mounted onto the fixture 7, in which FIG. 3A is a front view, FIG. 3B is a side view (a view of FIG. 3A from an arrow A), and FIG. 3C is a plan view (a view of FIG. 3A from an arrow B).

A plurality of substantially rectangular mounting holes 9 are provided side by side on the fixture 7. The optical adapter 10 is to be mounted to each of the mounting holes 9. For simplification, the drawing shows a state in which only the three optical adapters 10 are mounted to the mounting holes 9. As mentioned above, the adjacent optical adapters are arranged extremely close to each other. Also, although the present embodiment includes a swing mechanism that allows the optical adapter 10 to swing with respect to the fixture 7, the swing mechanism will be described in detail below and the illustrations thereof are omitted in FIG. 3A to FIG. 3C.

A cross section of the optical adapter 10 taken perpendicularly to an optical axis direction is in a substantially rectangular shape, and a protruding portion 12 protrudes from each of an upper face and a lower face of the optical adapter 10 (both outer faces in a vertical direction in FIG. 3A that is orthogonal to a direction in which the optical adapters 10 are provided side by side). An overall height of the optical adapter 10 including the protruding portions 12 is greater than a height of the mounting hole 9. Thus, when being inserted into the mounting hole 9, the optical adapter 10 is inserted to the vicinity of the protruding portions 12. On the other hand, a width of the mounting hole 9 is sufficiently larger than a width of the optical adapter 10 (a direction in which the optical adapters 10 are provided side by side is to be the width direction). Thus, there is a certain clearance formed between the optical adapter 10 and each edge portion of the mounting hole 9. The clearance is set according to a possible swing range of the optical adapter 10, which will be described later.

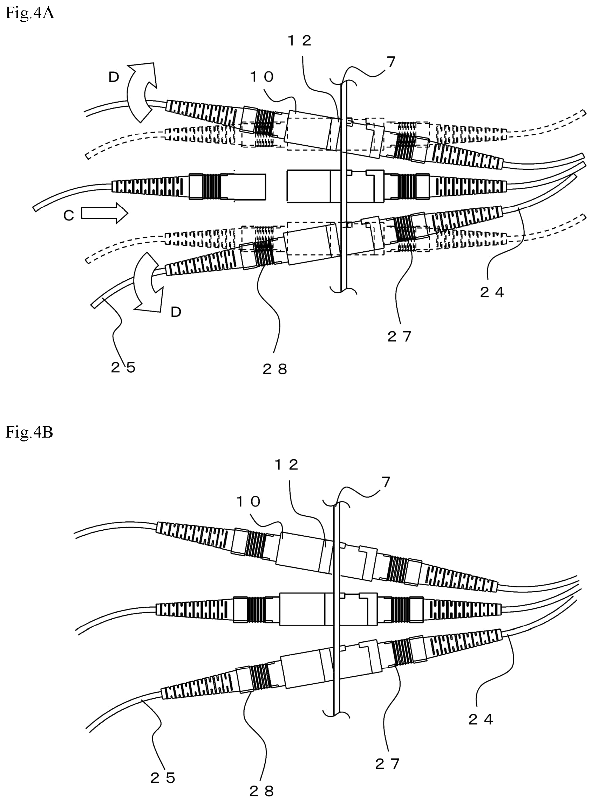

Next, an insertion/removal method for an optical connector with respect to the optical adapter retention structure will be described. FIG. 4A and FIG. 4B are views showing movement of the optical adapters 10. First, as shown in FIG. 4A, when connecting the central office side optical connector 28 to the middle optical adapter 10 in the drawing, the central office side optical connector 28 is moved straightly toward the optical adapter 10 of a connection target (in a direction of an arrow C in the drawing). At this time, spacing between the adjacent central office side optical connectors 28 and the optical adapters 10 is small, and the fingers come into contact with the adjacent central office side optical connectors 28 and the optical adapters 10.

At this time, since the swing mechanism, which will be described below, is provided at a mounting portion between the optical adapter 10 and the fixture 7, the central office side optical connectors 28 and the optical adapters 10 that are touched by the fingers swing in a direction in which the optical adapters 10 are provided side by side (in a direction of an arrow D in the drawing). That is, when inserting or removing the optical connector with respect to any one of the optical adapters 10, the swing mechanism below allows the other optical adapters 10 that are adjacent to the said optical adapter 10 to swing in the direction in which the optical adapters 10 are provided side by side, and this can create space around the said optical adapter 10. In this way, operation space can be obtained around the optical adapter 10, which is a target of the operation, and, as shown in FIG. 4B, the central office side optical connector 28 can be inserted into the optical adapter 10.

Then, when the fingers are removed from the space between the central office side optical connectors 28, an original state (FIG. 3C) is restored. That is, after the insertion/removal operation, the swing mechanism can return the other adjacent optical adapters 10 to the original position. As above, for any one of the optical adapters 10, when a force equal to or greater than a prescribed strength is applied to the other optical adapters 10 that are adjacent to the said optical adapter 10, the swing mechanism allows the other optical adapters 10 that are adjacent to the said optical adapter 10 to swing in the direction in which the other adjacent optical adapters 10 are provided when viewed from the said optical adapter 10, and when the force is removed, the swing mechanism can retain the optical adapters 10 in a direction substantially perpendicular to the fixture 7 due to a balance between forces in the swing mechanism.

This is also similar in a case in which the central office side optical connector 28 is removed from the optical adapter 10. In addition, when inserting/removing the central office side optical connector 28, the optical adapters 10 swing in directions so as to move the outside line side optical connectors 27 on the other side closer to each other. Whereas when inserting/removing the outside line side optical connector 27, the optical adapters 10 swing in directions so as to increase the spacing between the outside line side optical connectors 27 and decrease the spacing between the central office side optical connectors 28.

As above, the swing mechanism according to the present invention allows only the adjacent optical adapters 10 to swing and not the optical adapter 10 that is to be the target of insertion or removal. Thus, it is unnecessary to hold the swing state by hand at the time of insertion/removal operation of the optical connector. That is, touching by fingers during the operation allows the optical adapters 10 to swing for only an amount needed, and, when the operation is completed, the optical adapters 10 automatically return to the original state.

Here, it is preferable that a swing angle of the optical adapter 10 is approximately ±20 degrees or less. If the swing angle is greater than ±20 degrees, the adjacent optical-connector-attached conversion cords 24 or the optical-connector-attached central office cords 25 may interfere with each other when the optical adapter 10 swings, and this may cause optical effects. Thus, the width of the mounting hole 9 is set so that the swing angle of the optical adapter 10 is within the above range. That is, with respect to the width of the optical adapter 10, increasing the width of the mounting hole 9 greater than a certain value allows the optical adapter 10 to swing, and decreasing the width of the mounting hole 9 smaller than a certain value restricts the swing angle of the optical adapter 10 to ±20 degrees or less.

In general, the optical adapter 10 such as LC etc. has a rectangular cross section to the optical axis direction, having shorter sides and longer sides. At this time, it is preferable to dispose the optical adapter 10 on the fixture 7 making the swing direction and the shorter sides being parallel to each other (i.e., the optical adapter 10 can swing toward the longer sides) since this can reduce an amount of movement of the optical adapter 10 when swinging. At this time, the optical adapter 10 may be either a single-core type or a multi-core type.

For the fixture 7, a 19-inch rack that meets EIA/ECA-310-E or a cabinet and a rack that meet JIS C 6010-2 are applicable. In such the case, the fixture 7 can hold up to 25 optical adapters being provided side by side. Also, instead of being an integrated body as a whole, the fixture 7 may consist of a plurality of small fixtures, each of which has a set of a plurality of insertion holes, and which are coupled together and provided side by side in the direction in which the optical adapters are provided side by side.

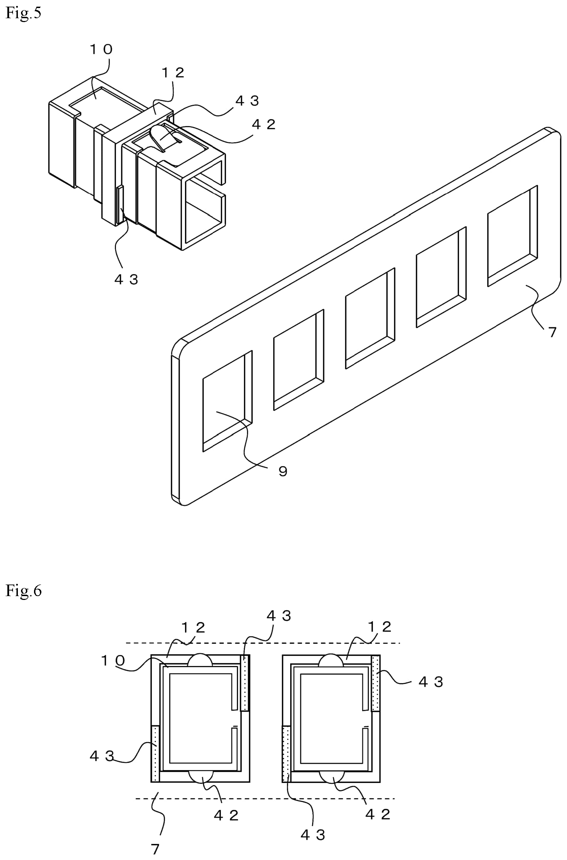

Next, the swing mechanism will be described in detail. FIG. 5 is a perspective view showing the optical adapter 10. As mentioned above, the protruding portions 12 protruding in a direction that is orthogonal to a swinging direction of the optical adapter 10 are provided. That is, the swing mechanism allows the optical adapter 10 to swing with the vicinity of the above-mentioned protruding portions 12 as a base. Also, a hard magnetic bodies 43 are fixed on both sides in the width direction of the optical adapter 10, which is the side-by-side direction of the optical adapters 10 (the side-by-side direction of the mounting holes 9 of the fixture 7). That is, the hard magnetic body 43 is disposed so as to protrude toward each side of the width direction of the optical adapter 10. Although details will be described below, a vertical position of the hard magnetic body 43 on one side of the optical adapter 10 in the width direction is different from a vertical position of the hard magnetic body 43 on the other side of the optical adapter 10 in the width direction.

The hard magnetic body 43 is a plate-like member formed of ferrite or neodymium, for example, and is fixed to the main body of the optical adapter 10 by using an adhesive or the like. A method for fixing the hard magnetic body 43 is not particularly limited to the above.

Also, a locking piece 42 is formed, facing toward the protruding portion 12, on each of upper and lower surfaces of the optical adapter 10 at a position away from the protruding portion 12. By just inserting the optical adapter 10 with the locking pieces 42 into the mounting hole 9, the edge portion of the mounting hole 9 is placed between the protruding portion 12 and the locking piece 42, and thus an optical adapter retention structure in which the optical adapter 10 is mounted to the fixture 7 can be obtained.

In general, the fixture 7 to which the optical adapters are mounted is made of a steel plate having a thickness of approximately between 1.0 mm and 2.0 mm. That is, the fixture 7 is formed of a soft magnetic body to which the hard magnetic body 43 can be strongly attracted. If the fixture 7 is formed of resin or the like, a plate material made of a soft magnetic body or another hard magnetic body that can be attracted to the hard magnetic body 43 may be put on a face of the fixture 7 facing the hard magnetic body 43. That is, a part of the fixture 7 facing the hard magnetic bodies 43 provided on the optical adapter 10 is formed of another hard magnetic body or a soft magnetic body that can be attracted to the hard magnetic bodies 43.

Here, the hard magnetic bodies 43 on both sides of the optical adapter 10 are disposed so as to be rotationally symmetrical with respect to a center of the optical adapter 10 when viewed from the front. When the optical adapter 10 is inserted into the mounting hole 9, each of the hard magnetic bodies 43 is attracted to a surface of the fixture 7 (the surface on each side of the mounting hole 9). That is, a width of parts to which the hard magnetic bodies 43 are disposed is greater than the width of the mounting hole 9. At this time, the hard magnetic bodies 43 are disposed such that attractive forces on the left and right sides in the width direction of the optical adapter 10 are approximately equal. Thus, a flat face of the hard magnetic body 43 and a flat face of the fixture 7 are attracted to each other and the optical adapter 10 is mounted to the fixture 7.

As above, in a state in which the optical adapter 10 is inserted into the mounting hole 9, the optical adapter 10 is mounted to the fixture 7 due to the attractive force of the hard magnetic bodies 43 on both sides of the width direction of the optical adapter 10. Thus, at a normal time, the optical adapter 10 is mounted substantially perpendicular to the fixture 7 by magnetic attractive force and its posture can be maintained.

When any one of the optical adapters 10 receives a force that is equal to or greater than the attractive force of the hard magnetic bodies 43 in such the direction in which the optical adapters 10 are provided side by side, one of the hard magnetic bodies 43 in the width direction lifts up from the fixture 7, allowing the optical adapter 10 to swing. More particularly, when the optical adapter 10 receives an external force in the swing direction of the optical adapter 10, the optical adapter 10 tilts with an end portion of one of the hard magnetic bodies 43 as a center, and the other hard magnetic body 43 separates away from the facing face of the fixture 7. When the external force is removed in such the state, the optical adapter 10 can return to the normal state (a perpendicular posture of the optical adapter 10 with respect to the fixture 7) since there is always an attractive magnetic force between the hard magnetic body 43 and the fixture 7, which has a soft magnetic property. That is, when the force applied to the optical adapter 10 is removed, the attractive force of the hard magnetic bodies 43 makes the optical adapter 10 swing to be held in the direction substantially perpendicular to the fixture 7.

Spacing between the protruding portion 12 and a tip end of the locking piece 42 is equal to or greater than a thickness of the fixture 7. That is, there is a clearance between the protruding portion 12 or the locking piece 42 and the fixture 7. This prevents the locking pieces 42 from obstructing the swinging of the optical adapter 10. The protruding portions 12 and the like are not always necessary if it is possible to mount the optical adapter 10 to the fixture 7 so as to be able to swing. Also, the locking pieces 42 are not always necessary if the attractive force of the hard magnetic body 43 is strong enough.

Next, the optical adapter retention structure in which the optical adapters 10 are mounted to the fixture 7 will be described in more detail. FIG. 6 is a plan view showing a state in which the optical adapters 10 are provided side by side onto the fixture 7. For simplification, only the two optical adapters 10 are shown in the drawing. As mentioned above, the hard magnetic bodies 43 are fixed on a front surface (a surface side facing the fixture 7) on both sides of the width direction of the optical adapter 10.

At this time, as mentioned above, the vertical position of the hard magnetic body 43 on one side of the optical adapter 10 in the width direction is different from the vertical position of the hard magnetic body 43 on the other side of the optical adapter 10 in the width direction. For example, on one side of the width direction of the optical adapter 10 (on the left side in the drawing, for example), the hard magnetic body 43 is disposed at a position in a lower half of a height direction of the optical adapter 10. Meanwhile, on the other side of the width direction of the optical adapter 10 (on the right side in the drawing, for example), the hard magnetic body 43 is disposed at a position in an upper half of the height direction of the optical adapter 10. That is, the vertical position of the hard magnetic body 43 on one side of the optical adapter 10 in the width direction and the vertical position of the hard magnetic body 43 on the other side of the optical adapter 10 in the width direction are different so that the hard magnetic bodies 43 are disposed at non-overlapping positions in the height direction.

At this time, the hard magnetic bodies 43 on both sides of the optical adapter 10 have the same size, and attractive forces with respect to the fixture 7 are substantially equal. In this way, the optical adapters 10 are held in place by the attractive forces between the hard magnetic bodies 43, which demonstrate equal attractive forces in the width direction, and the fixture 7. That is, it is possible to maintain the optical adapters 10 in approximately perpendicular postures with respect to the fixture 7.

By changing the heights of the hard magnetic bodies 43 on both sides of the optical adapter 10 in this way, it is possible to prevent interference between the hard magnetic bodies 43 of the adjacent optical adapters 10. That is, at facing parts between the optical adapters 10 that are adjacent to each other, the hard magnetic body 43 of the optical adapter 10 on one side (for example, on the left side in the drawing) is positioned at an upper part, and the hard magnetic body 43 of the other adjacent optical adapter 10 (for example, on the right side in the drawing) is positioned at a lower part, and thus the attractive force and repulsive force between the two hard magnetic bodies 43 are suppressed. Thus, there is no obstruction to the swinging of the optical adapters 10, nor to the returning of the optical adapters 10 when the load is removed. Thus, interference of magnetic flux between the adjacent hard magnetic bodies 43 can be prevented.

By changing the positions at which the hard magnetic bodies 43 provided on the adjacent optical adapters 10 are disposed in this way, interference therebetween can be suppressed. Thus, magnetic poles of the hard magnetic bodies 43 on both sides of the width direction of the optical adapter 10 may be opposite, or all the hard magnetic bodies 43 may be disposed facing the same direction. As above, it is possible to dispose the optical adapters 10 stably in the normal state even when the optical adapters 10 are disposed close to each other, and, as a result, packaging density of the optical adapters 10 can be increased. Also, even if the optical adapter 10 swings with an angle equal to or greater than a predetermined value, the optical adapter 10 can be reliably returned to the original position.

### (Second Embodiment)

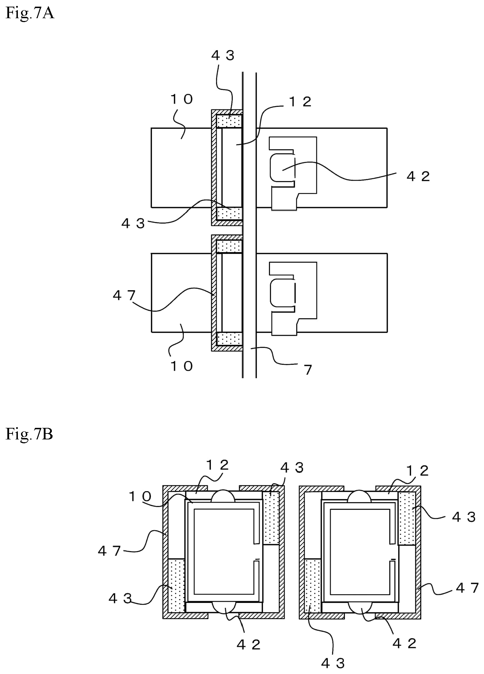

Next, a second embodiment will be described. FIG. 7A is a plan view showing a state in which the optical adapters 10 according to the second embodiment are provided side by side, and FIG. 7B is a front view of the optical adapter 10. In the embodiment hereinafter, structures having the same functions as the first embodiment will have the same notations as in FIG. 1 to FIG. 6 and redundant descriptions will be omitted.

In the present embodiment, the hard magnetic body 43 is fixed to the main body of the optical adapter 10 by using a holder 47, which is retaining means. Although there are no particular limitations for material of the holder 47, the holder 47 may be formed of a non-magnetic body, such as resin, for example. At this time, a clearance may be formed between the fixture 7 and the hard magnetic bodies 43 to adjust the attractive force between the fixture 7 and the hard magnetic bodies 43.

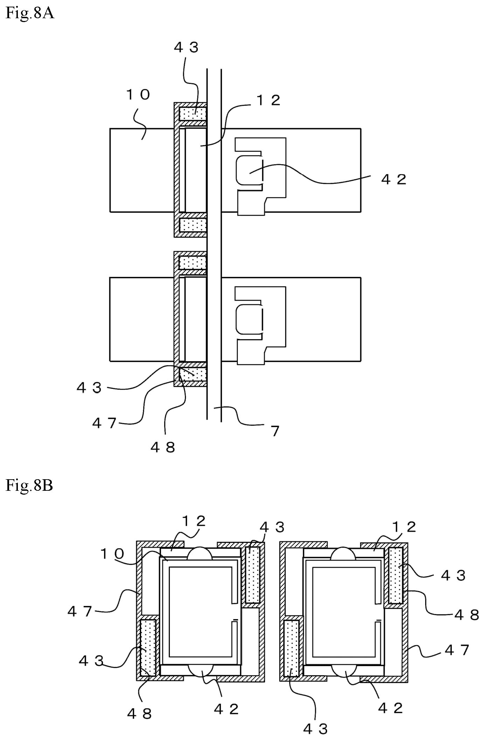

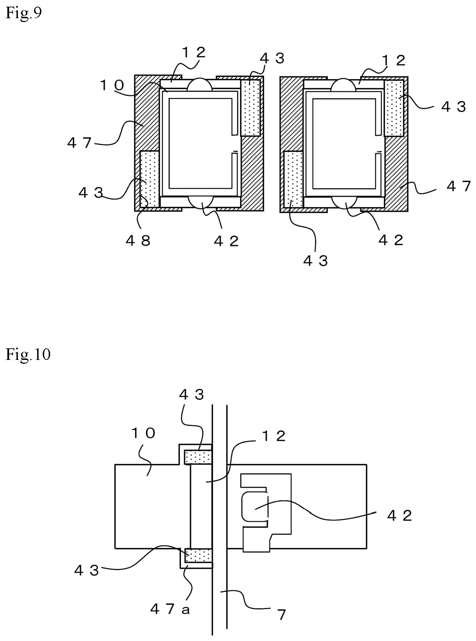

There are no particular limitations for a shape of the holder 47. FIG. 8A is a plan view of the optical adapter 10 using another holder 47 and FIG. 8B is a front view. In an example shown in FIG. 8A and FIG. 8B, the holder 47 is provided with concave portions 48 and the hard magnetic bodies 43 are fitted into the concave portions 48 and fixed. The concave portion 48 may be formed such that the holder 47 opens only to the front when viewed from the front as shown in FIG. 8B (i.e. the hard magnetic body 43 is covered from the entire circumference when viewed from the front), or the concave portion 48 may be provided such that the holder 47 opens not only to the front but also to a side of the main body of the optical adapter as shown in FIG. 9.

Also, as shown in FIG. 10, the retaining means for the hard magnetic body 43 may be formed integrally with the main body of the optical adapter 10. That is, the optical adapter 10 may include retaining portions 47a for retaining the hard magnetic bodies 43. In such the case, the optical adapter 10 itself is formed of a non-magnetic body.

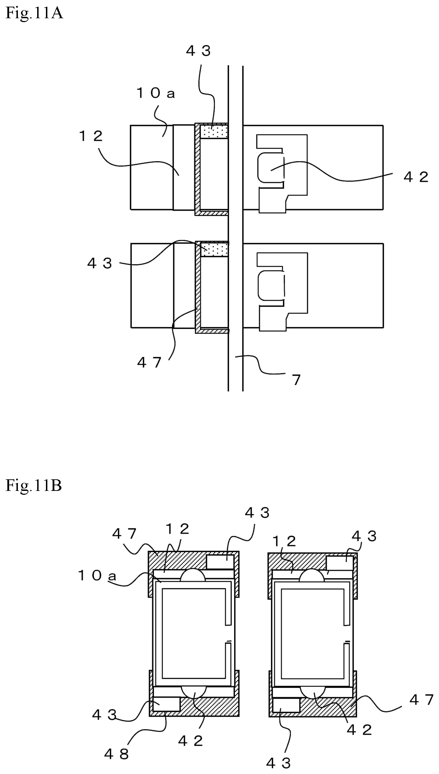

Also, the hard magnetic bodies 43 may not be disposed on both side faces of the optical adapter. FIG. 11A is a plan view showing a side-by-side arrangement of optical adapters 10a, and FIG. 11B is a front view of the optical adapter 10a. The optical adapter 10a is approximately similar to the optical adapter 10 except that the hard magnetic bodies 43 are disposed in the vicinity of end portions in a width direction of the optical adapter 10a on each surface in a vertical direction that is perpendicular to a direction in which the optical adapters 10a are provided side by side. That is, the hard magnetic bodies 43 are disposed in the vicinity of side portions in the width direction of the optical adapter 10a on upper and lower surfaces of the optical adapter 10a.

For example, on one side of the optical adapter 10a in the width direction (for example, the left side in FIG. 11B), the hard magnetic body 43 is disposed on the lower surface of the optical adapter 10. Meanwhile, on the other side of the optical adapter 10a in the width direction (for example, the right side in FIG. 11B), the hard magnetic body 43 is disposed on the upper surface of the optical adapter 10. That is, the vertical position of the hard magnetic body 43 on one side of the optical adapter 10a in the width direction and the vertical position of the hard magnetic body 43 on the other side of the optical adapter 10a in the width direction are different so that the hard magnetic bodies 43 are disposed at non-overlapping positions in the height direction.

Even in such the case, it is possible to suppress the interference between the adjacent hard magnetic bodies 43. Also, the hard magnetic bodies 43 are disposed above and below the optical adapter 10a, and thus the optical adapters 10a can be disposed more closely. As above, the hard magnetic bodies 43 may be disposed in the vicinity of both end portions in the width direction of the optical adapter on the side surfaces or on the upper and lower surfaces of the optical adapter.

According to the second embodiment, the same effects as in the first embodiment can be obtained. By retaining the hard magnetic body 43 with the retaining means, the hard magnetic body 43 can be reliably retained at a freely-selected position.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### (DESCRIPTION OF NOTATIONS)

- 1: rack
- 2: frame
- 3: optical patch panel
- 4: mounting portion
- 5: outside line cable fixing portion
- 6: optical fiber-splicing tray
- 7: fixture
- 8: cord-receiving tray
- 9: mounting hole
- 10, 10a: optical adapter
- 12: protruding portion
- 20: outside line cable
- 21: cable sheath
- 22: optical fiber
- 24: optical-connector-attached conversion cord
- 25: optical-connector-attached central office cord
- 27: outside line side optical connector
- 28: central office side optical connector
- 42: locking piece
- 43: hard magnetic body
- 47: holder
- 47a: retaining portion
- 48: concave portion
- 100: optical adapter
- 103: hard magnetic body
- 107: fixture
- 109: mounting hole

## Claims

1. An optical adapter retention structure comprising:
a fixture having a plurality of mounting holes that are provided side by side;
optical adapters to be mounted into the plurality of mounting holes; and
a swing mechanism that allows the optical adapter to swing with respect to the fixture, wherein
hard magnetic bodies are fixed in the vicinity of both end portions in a width direction of the optical adapter, the width direction being a direction in which the optical adapters are provided side by side;
a part of the fixture facing the hard magnetic bodies provided on the optical adapters is formed of a soft magnetic body that can attract the hard magnetic bodies;
a vertical position of the hard magnetic body on one side of the optical adapter in the width direction is different from a vertical position of the hard magnetic body on the other side of the optical adapter in the width direction.; and
for any one of the optical adapters, when a force equal to or greater than attractive force of the hard magnetic bodies is applied to the optical adapters that are adjacent to the said optical adapter, the swing mechanism allows the optical adapters that are adjacent to the said optical adapter to swing in a direction in which the adjacent optical adapters are provided as viewed from the said optical adapter, and when the force is removed, the swing mechanism can hold the optical adapters in a direction substantially perpendicular to the fixture due to the attractive force of the hard magnetic bodies.

2. The optical adapter retention structure according to claim 1, wherein
the hard magnetic bodies are fixed to a main body of the optical adapter using retaining means.

3. The optical adapter retention structure according to claim 2, wherein the retaining means is formed integrally with the main body of the optical adapter.

4. The optical adapter retention structure according to claim 2, wherein
the retaining means includes concave portions, and the hard magnetic bodies are fitted into the concave portions.

5. The optical adapter retention structure according to claim 2, wherein there is a clearance formed between the hard magnetic bodies and the fixture.

6. The optical adapter retention structure according to claim 1, wherein
the hard magnetic body is disposed in the vicinity of an end portion in the width direction of the optical adapter on each surface in a vertical direction that is perpendicular to the direction in which the optical adapters are provided side by side.

7. An optical connector insertion or removal method with respect to the optical adapter retention structure according to claim 1, the method comprising:
when inserting or removing an optical connector to or from any one of the optical adapters, swinging the other optical adapters that are adjacent to the said optical adapter in a direction in which the optical adapters are provided side by side by using the swing mechanism to create space around the said optical adapter; and
returning the other optical adapters to original positions by using the swing mechanism after the insertion or removal operation is completed.
